# EUROPEAN PATENT SPECIFICATION

(11) **EP 2 441 627 B1**
(45) Date of publication and mention of the grant of the patent: **16.07.2014**
(21) Application number: 10187918.7
(22) Date of filing: 18.10.2010
(51) Int. Cl.: B60R 21/213, B60R 21/21, B60R 21/231, B60R 21/233

(54) **An airbag arrangement for a motor vehicle**
Airbaganordnung für Kraftfahrzeug
Agencement d'airbag pour véhicule à moteur

(43) Date of publication of application: 18.04.2012
(73) Proprietor: Autoliv Development AB, 447 83 Vårgårda (SE)
(72) Inventor: Garret, Gilles, F-76000, Rouen (FR); Alenspach, Guillaume, FR-76116, Martainville Epreville (FR); Oh, Hyong-Sok, Suwon-City, Gyeonggi-Do (KR); Lee, Soon-Bok, Chungchungnam-Do (KR)
(74) Representative: Parry, Simon James

(56) References cited:
- DE-A1-102007 011 983
- DE-U1- 20 101 564
- DE-U1- 29 921 743
- US-A1- 2007 013 173
- US-A1- 2008 100 045

## Description

The present invention relates to an airbag arrangement for a motor vehicle, and more particularly relates to an airbag arrangement configured to provide side protection to an occupant of the vehicle in the event of a roll-over or side-impact accident.

It is known to provide motor vehicles with inflatable airbags in order to provide protection to the occupants of the vehicle in the event of an accident. Such airbags can take several different forms, depending upon the manner in which they are intended to protect the occupant and the type of accident situation they are to be deployed in. For example, it is known to provide passenger cars with airbags in the form of so-called inflatable curtains which are initially tightly packed and stowed in the roof lining of the vehicle adjacent the roof rail of the vehicle, and which are designed to inflate and hence deploy downwardly in the event of an side-impact or roll-over accident such that the airbag takes the form of a curtain extending over the front and rear side windows of the vehicle, between the windows and the adjacent seats of the vehicle. Such airbags are designed to reduce the risk of an adjacent occupant's head from striking the side window of the vehicle and from passing through the window which can be extremely dangerous indeed.

Other types of airbag are also used to provide side protection to the occupant of a motor vehicle. For example, it is known to provide side-airbags which are initially tightly packed and stowed either in the outboard side of a front seat or the adjacent B-pillar of the vehicle, and which are configured for inflation into the space between the occupant of the seat and the side panel or door of the vehicle in order to provide side protection to the pelvic and/or thoracic regions of the occupant's body. Such airbags are therefore sometimes referred to as pelvic bags or thorax bags.

As will be appreciated, it is desirable to provide an airbag arrangement that is configured to provide the combined side protection offered by an inflatable curtain and a pelvis/thorax bag and so it is not uncommon for passenger cars now to be provided with both sorts of bags, each having its own inflator and associated actuating circuitry.

US2008/100045A1 proposes a side airbag which is designed to offer protection to both the torso and head regions of an occupant. However, this is done without the use of an inflatable curtain type airbag.

DE 102007011983 discloses a side airbag arrangement according to the preamble of claim 1.

It is an object of the present invention to provide an improved side airbag arrangement.

According to the present invention, there is provided a side airbag arrangement in a motor vehicle, the arrangement comprising first and second inflatable cushions and an inflator actuable to inflate both cushions, wherein the first cushion is arranged in fluid communication with the inflator to receive inflating gas directly from the inflator, and the second cushion is arranged in fluid communication with the first cushion to receive inflating gas via the first cushion, the first and second cushions being configured for inflation into respective deployed positions in which at least an upper region of the first cushion is located adjacent the second cushion on the outboard side of the second cushion, such that said second cushion is supported on its outboard side by said upper region of the first cushion, wherein the first and second cushions are fluidly connected to one another in said upper region of the first cushion by at least one flow port arranged to direct said gas from the first cushion into the second cushion in a substantially inboard direction, the arrangement being characterised in that the or each said flow port is defined by a first flow aperture formed in said upper region of the first cushion and a second flow aperture formed in an upper region of the second cushion, the first and second flow apertures being aligned and fixedly connected to one another.

Advantageously, the second cushion comprises at least two discrete inflatable chambers, each chamber being fluidly connected to the first cushion by a respective said flow port.

Preferably, the first and second cushions are formed from fabric material, and are interconnected by at least one peripheral seam provided around said aligned first and second apertures.

Conveniently, the arrangement is configured such that inflation of the second cushion is delayed relative to inflation of the first cushion upon actuation of the inflator.

Preferably, the motor vehicle in which the arrangement is provided has a B-pillar, the inflator being mounted to the B-pillar.

Advantageously, the motor vehicle also has a roof rail, and the inflator is mounted to the B-pillar at a position spaced below the roof rail.

Conveniently, the motor vehicle has a seat, the first cushion being initially provided in a package mounted to the B-pillar of the motor vehicle and arranged for inflation into a deployed position generally adjacent the seat to provide side protection to the torso and/or pelvis region of an occupant of the seat.

Preferably, the first cushion package is mounted to the B-pillar of the motor vehicle at a position spaced below the roof rail of the vehicle, the first cushion being configured to inflate in a substantially upwards direction towards the roof rail.

Advantageously, the motor vehicle has a side window, the second cushion being initially provided in a package mounted to the roof rail of the motor vehicle and arranged for inflation in a substantially downwards direction into a deployed position generally adjacent the side window to provide side protection to the head region of an adjacent occupant.

Conveniently, the first cushion is tapered or is otherwise shaped so as to be narrower in its upper region than in its lower region, the upper region of the cushion thereby defining a flow duct configured to direct a flow of inflating gas from the lower region of the first cushion to an upper region of the second cushion.

Preferably, the first cushion package is mounted to the B-pillar at a position below the lowermost edge of the second cushion when the second cushion adopts its deployed position, such that a lower region of the first cushion is positioned below the lowermost edge of the second cushion.

Advantageously, the motor vehicle has a front side window and a rear side window, the second cushion having a front end region arranged for deployment generally adjacent the front side window, and a rear end region arranged for deployment generally adjacent the rear side window, the or each said flow port being located substantially between said front and rear ends in a substantially central region of the second cushion.

Conveniently, the inflatable volume of the first cushion is substantially equal to the inflatable volume of the second cushion.

So that the invention may be more readily understood, and so that further features thereof may be appreciated, embodiments of the invention will now be described by way of example with reference to the accompanying drawings in which:
Figure 1 is schematic side view of part of a motor vehicle equipped with an airbag arrangement in accordance with an embodiment of the present invention, the airbag arrangement being in an un-deployed condition;
Figure 2 is a view corresponding generally to that of figure 1, but illustrating the airbag arrangement in a deployed condition in which it offers side protection to front and rear occupants of the motor vehicle;
Figure 3 is a view corresponding to that of figure 2, but which shows an alternative embodiment;
Figure 4 is a perspective view from the front showing the un-deployed airbag arrangement in and the adjacent front seat occupant;
Figure 5 is a side view showing the two discrete cushions of the airbag arrangement (as viewed from the outboard side) in more detail;
Figure 6 is an enlarged view of part of the airbag arrangement, showing detail of the connection between the two cushions shown in figure 5;
Figure 7 is a perspective view showing further detail of the arrangement, one of the cushions being shown in an alternate position;
Figure 8 is a view similar to that of figure 5, but showing the airbag arrangement as viewed from the opposite (inboard) side;
Figure 9 is a front view showing the airbag arrangement of the present invention at an early stage during its deployment;
Figure 10 is a side view showing the arrangement at a subsequent stage during its deployment;
Figure 11 is a front view showing the airbag arrangement at still further subsequent stage during its deployment;
Figure 12 is a side view showing the airbag arrangement in a substantially fully inflated condition;
Figure 13 is a schematic illustration showing the construction of an airbag arrangement in accordance with a modified embodiment of the present invention; and
Figure 14 is a schematic illustration showing the construction of an airbag arrangement in accordance with another embodiment of the present invention.

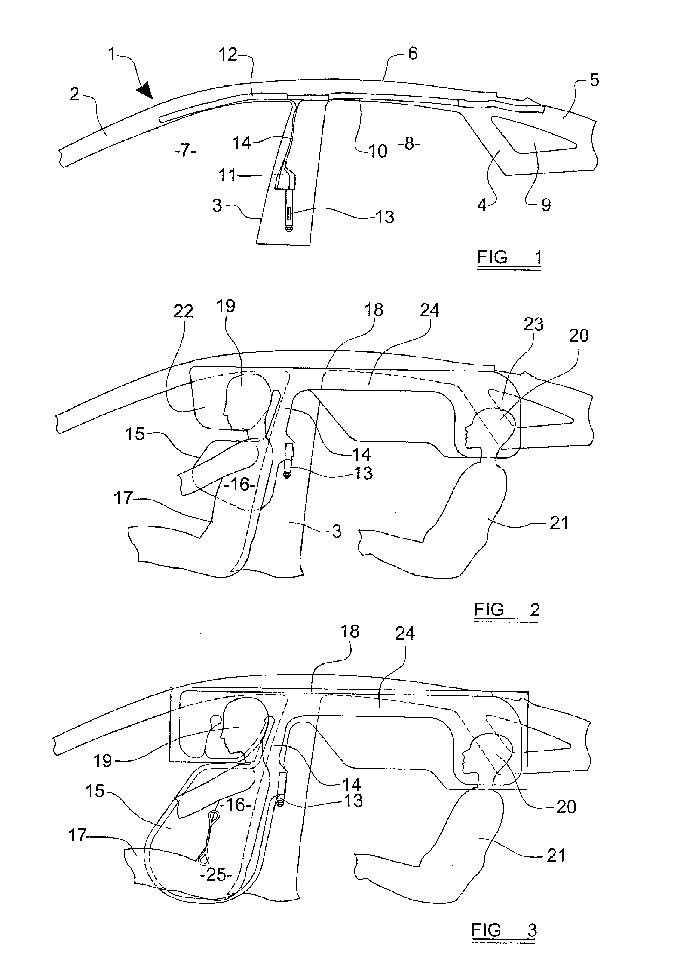

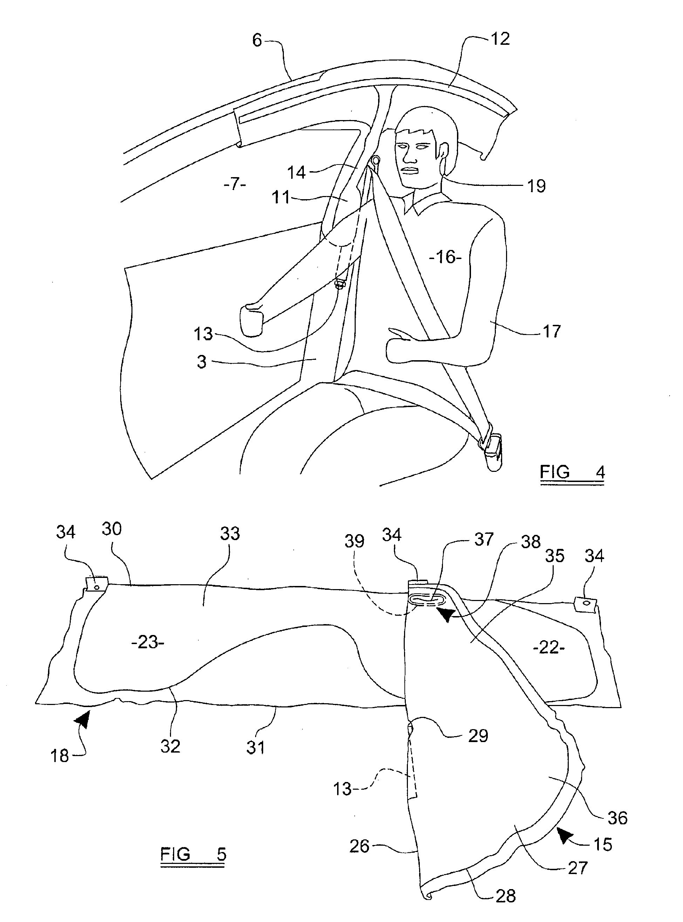

The invention will be initially described in general terms with reference to figures 1 to 4, and will then be described in further detail with reference to figures 5 to 13.

So, turning initially to consider figure 1 in detail, there is illustrated part of the side structure 1 of a typical passenger car having two rows of seats or at least a pair of front seats and a rear bench-seat (the seats themselves actually being omitted from the drawing). The side structure comprises an A-pillar 2, a B-pillar 3, a C-pillar 4 and a D-pillar 5 in a generally conventional manner. As will be noted, the A- and D-pillars 2, 5 in particular are inclined and effectively cooperate to define a roof rail 6 of the motor vehicle from which the B-pillar 3 depends in a generally vertical manner. The space 7 between the A-pillar 2 and the B-pillar 3 defines a front door/window aperture, and the space 8 between the B-pillar 3 and the C-pillar 4 defines a rear door/window aperture. The space 9 between the C-pillar 4 and the D-pillar 5 defines a relatively small aperture for a rear quarter light window of the vehicle.

An airbag arrangement 10 is shown mounted to the side structure 1 of the vehicle. As will be explained in more detail hereinafter, the airbag arrangement 10 comprises two discrete inflatable cushions. It will thus be noted that the arrangement illustrated in figure 1, which is shown in its un-deployed condition, comprises a first cushion package 11 and a second cushion package 12. The first cushion package 11 comprises a tightly packed first inflatable cushion and is mounted to the B pillar 3 at a position spaced below the roof rail 6, and indeed preferably at a position spaced below the level of the front window of the vehicle. The first cushion package 11 is associated with an inflator 13 which is also mounted to the B-pillar in this region. It is envisaged that the inflator 13 will actually be mounted rigidly to the B-pillar 3 and the first cushion within the first cushion package 11 will be connected to the inflator, the inflator thus serving to interconnect the first cushion and the B-pillar 3.

The second cushion package 12 is elongate in form and is mounted to the side structure of the vehicle along the roof rail 6 so as to lie above the spaces 7 and 8 defining the front and rear window apertures.

Part of the first cushion package 11 is shown extending up the B-pillar to the second cushion package 12. This part of the first cushion package houses a flow duct 14 which fluidly interconnects the respective cushions within the first and second cushion packages 11, 12. As will be noted, the airbag arrangement 1 comprises only a single inflator 13 which is directly connected to the first cushion within the first cushion package 11. The second cushion within the second cushion package 12 does not have its own inflator, but instead receives a flow of inflating gas indirectly, the flow being directed from the first cushion and along the flow duct 14 in a manner which will be described in more detail hereinafter.

Figure 2 illustrates in schematic form the general coverage area provided by the airbag arrangement 1 when it is fully deployed. As will be noted, the first cushion 15 is directly inflated by the inflator 13 so as to deploy from the first cushion package 11 and adopts a deployed position generally adjacent the front seat of the motor vehicle so as to provide side protection to the torso 16 of the front seat occupant 17. As the first cushion 15 inflates, the internal gas pressure inside the cushion increases rapidly, such that the gas is caused to flow up the generally vertically arranged flow duct 14 and into the second cushion 18. This flow of gas along the flow duct 14 thus causes the second cushion 18 to inflate. The second cushion 18 thus deploys from its cushion package 12 in a generally downwards manner so as to adopt a deployed position generally adjacent the front and rear side windows of the vehicle as illustrated schematically in figure 2, thereby providing side protection to the respective head regions 19, 20 of the front and rear seat occupants 17, 21. The second cushion 18 is preferably configured so as to have a front inflatable region 22 and a rear inflatable region 23 arranged to deploy generally adjacent the head regions 19, 20, the two inflatable regions 22, 23 being connected by an internal flow tube 24 to which the flow duct 14 is connected.

As will thus be noted from figure 2, the first cushion 15 takes the general form of a so-called torso bag in the sense that it deploys adjacent the torso 16 of the front seat occupant 17 to provide side protection to the occupant's torso. In contrast, the second cushion 18 takes the general form of a so-called inflatable curtain in the sense that it deploys downwardly from the roof rail 6 so as to adopt a deployed position in which it extends across the front and rear side windows of the vehicle to provide side protection to the head regions 19, 20 of the front and rear occupants 17, 21 of the vehicle. The coverage area of the airbag arrangement 1 illustrated in figure 2 is thus equivalent to the combined coverage area of a torso bag and an inflatable curtain, and so the airbag arrangement 1 can be thought of as a combination torso-bag/inflatable curtain arrangement in which both cushions are inflated by a single inflator.

Figure 3 illustrates the general coverage area provided by a slightly modified version of the airbag arrangement shown in figure 2. In the arrangement of figure 3 the first cushion 15 is significantly larger and is sized and configured so as to inflate into a deployed position adjacent both the torso 16 and the pelvis 25 regions of the front seat occupant 17. The second cushion 18 is substantially identical to that shown in the figure 2 arrangement. The coverage area of the airbag arrangement illustrated in figure 3 is thus equivalent to the combined coverage area of a pelvis bag and an inflatable curtain, and so the airbag arrangement 1 can be thought of as a combination pelvis-bag/inflatable curtain arrangement, in which both cushions are inflated by a single inflator.

For further assistance in understanding the manner in which the airbag arrangement is installed in the vehicle so as to provide the inflation characteristics described above, Figure 4 shows the uninflated arrangement in relation to the occupant 17 of the front seat of the vehicle, as viewed from in front of the occupant 17.

Turning now to consider figures 5 to 8, the construction of the two cushions 15, 18 will be described in further detail. Both of the cushions 15, 18 are formed from flexible sheet material, and are preferably formed from fabric material.

In the arrangement shown in figure 5, the first cushion 15 has a generally triangular shape in its uninflated condition, and is formed from a single sheet of generally diamond-shaped fabric which is folded about a central fold line 26 to create two superimposed triangular layers 27. The superimposed layers 27 are then interconnected by a line of stitching 28 running around the free edges of the two layers to create a peripheral seam. About halfway along the folded edge 26, there is provided a gas inlet aperture 29 formed through the fabric sheet, the inlet aperture being configured to receive or otherwise connect to the inflator 13. As will thus be noted, the inflator 13 is preferably inserted directly into the first cushion 15 such that its gas outlet apertures (not shown) are located inside the inflatable volume of the cushion. It is furthermore proposed that the inflator 13 will be mounted to the B-pillar 3 of the vehicle in a manner effective also to mount the first cushion package 11 to the B-pillar. For example, the inflator may be provided with a pair of mounting bolts projecting outwardly through the fabric of the first cushion, the mounting bolts being secured to the structure of the B-pillar, to thereby trap and secure the adjacent region of the cushion fabric.

As will be noted, the triangular shape of the first cushion 15 gives it a tapered configuration which narrows towards its upper region.

The second cushion 18 takes the form of a generally conventional inflatable curtain. The second cushion may thus be formed from a generally rectangular sheet of fabric which is folded in half about a central fold line 30 running along its long axis to create two superimposed rectangular layers 31. The superimposed layers 31 are then interconnected by a line of stitching 32 which follows a somewhat serpentine path to define an inflatable chamber 33 between the two layers 31, the chamber 33 having a front region 22 and a rear region 23 in the manner already mentioned. Alternatively, it is envisaged that the second cushion 18 may be formed by a so-called one-piece weaving process in which the two layers 31 are woven simultaneously with their warp and weft yarns being interwoven in selected areas to create the seam 32, thereby defining the inflatable chamber 33. Indeed, it is also envisaged that the first cushion 15 could also be formed via a similar technique.

The second cushion 18 is provided with a number of mounting tabs 34 at positions along its upper edge 33, the tabs being configured to fixedly mount the cushion to the roof rail 6 of the vehicle structure 1.

Figure 5 shows the first cushion 15 partially superimposed on the second cushion 18, such that the tapered upper region 35 lies across a generally central region of the second cushion, intermediate the two end regions 22, 23. The relatively wide lower region 36 of the first cushion extends below the lower edge of the second cushion. The two cushions are physically and fluidly connected to one another in this position. This connection is achieved by providing each cushion with a small aperture and then connecting the two apertures together to form a flow port, as will now be described.

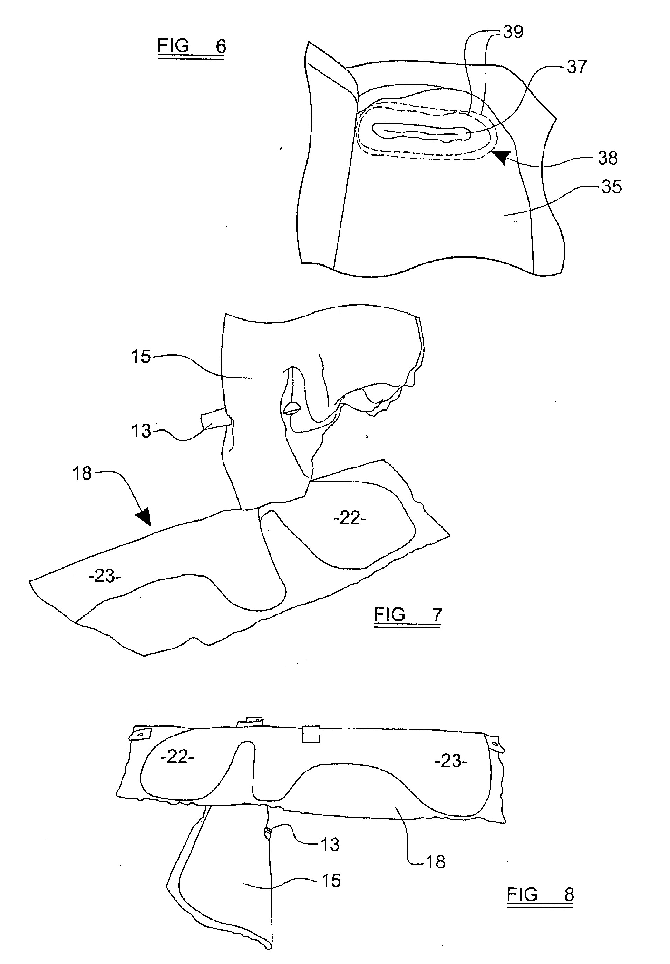

The upper region 35 of the first cushion 15 is provided with an aperture 37 (shown in phantom) in the fabric layer 27 which faces and hence lies against the second cushion. This aperture 37 is provided at the upper end of the tapered upper region 35 and is illustrated in the form of an elongate slit (visible most clearly in figure 6). The fabric layer 31 of the second cushion 18 which lies against the superimposed region of the first cushion is provided with a substantially identical aperture 37, and the two apertures are aligned and superimposed to define a flow port 38 fluidly interconnecting the internal volume of first cushion 18 to the inflatable chamber 33 of the second cushion. The two cushions 15, 18 are then secured to one another by one or more peripheral seams 39 which run concentrically around the aligned apertures 37 defining the flow port 38. The seams 39 are preferably formed by lines of stitching which serve to interconnect only the two adjacent layers 27, 31 of fabric of the two cushions. The two outermost layers of fabric 27, 31 of each cushion are not stitched in this manner. The flow port 38 is thus provided internally of the cushions.

Figure 7 shows the first cushion 15 lifted up relative to the second cushion, to illustrate the manner in which the internal seams 39 around the flow port 38 serve to secure the two cushions together. As will be noted, the cushions are connected in this manner at an upper region of the second cushion 18, between the two end regions 22, 23 of the inflatable chamber 33. Figure 8 shows the complete arrangement turned over, and hence viewed from the opposite side.

As will be appreciated, the above-described fluid connection between the two cushions 15, 18 permits the flow of inflating gas from the first cushion 15 (which is inflated directly from the inflator 13) to the second cushion 18. The tapered upper region 35 of the second cushion can be considered to define the flow duct 14 illustrated schematically in figures 1 to 4, and hence serves to direct the gas inside the first cushion upwardly towards the flow port 38 for inflation of the second cushion 18.

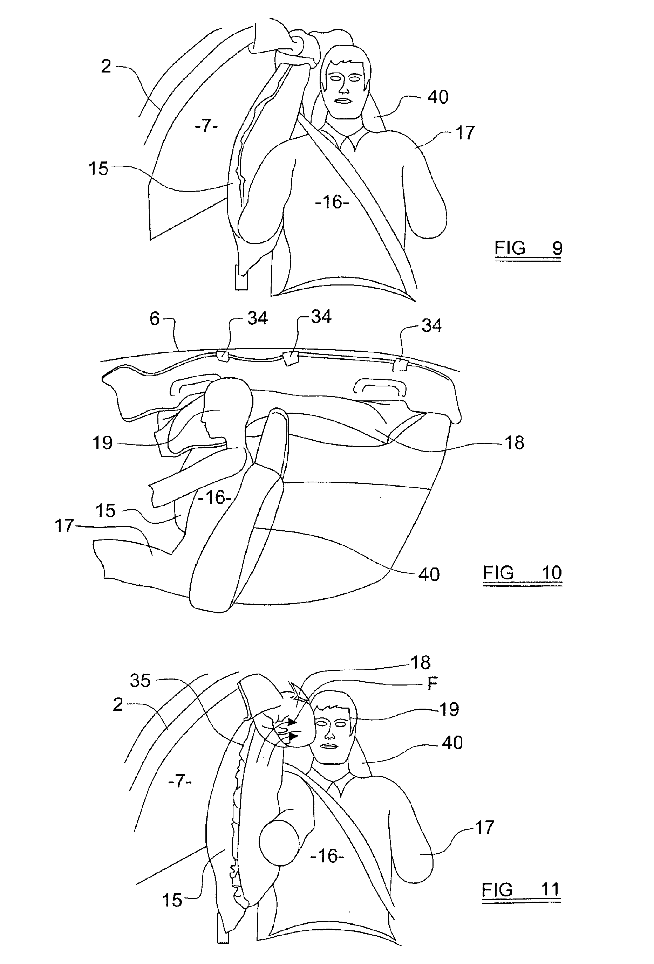

Deployment of the airbag arrangement 1 will now be described with reference to figures 9 to 12 which illustrate successive stages of deployment.

Upon detection of an accident requiring deployment of the side airbag arrangement 1 (for example by a crash-sensor and an associated trigger circuit of a type known *per* se), the inflator 13 is actuated. The inflator 13 will thus produce a large volume of inflating gas which is directed into the first cushion 15. The first cushion 15 will thus inflate, thereby developing from the first cushion package 11 in a generally forwards and upwards direction. Figure 9 illustrates the first cushion in a partially inflated condition during this stage of the deployment. As will be noted, at this stage the first cushion 15 has become inflated so as to adopt a position generally adjacent the torso 16 of the front seat occupant 17, between the occupant and the side panel of the vehicle, thereby quickly providing side protection to the occupant's torso 16. It is envisaged that the first cushion 15 will achieve significant inflation in this manner very quickly; for example in the region of 8 ms after initial actuation of the inflator 13.

As the first cushion 15 unfolds and/or unrolls from its initial package 11 during this initial stage of deployment, the flow duct 14 defined by the tapered upper region 35 of the cushion will open, thereby permitting the flow of gas from the partially inflated first cushion 15 into an upper region of the second cushion, via the interconnecting flow port 38. When this happens, the second cushion will thus begin to inflate and deploy downwardly from its initial package 12 provided along the roof rail 6 towards a deployed position in which it is extends across the front and rear windows of the vehicle, between the windows and the adjacent seats. Figure 10 shows the second cushion 18 during this stage of the deployment, and clearly shows the cushion developing into a position in which it will offer side protection to the head region 19 of the front seat occupant 17 and also the head region of a rear seat occupant (not shown) in the manner of an inflatable curtain. Figure 10 depicts the airbag arrangement at an intermediate stage of deployment; approximately 20 ms after initial actuation of the inflator 13.

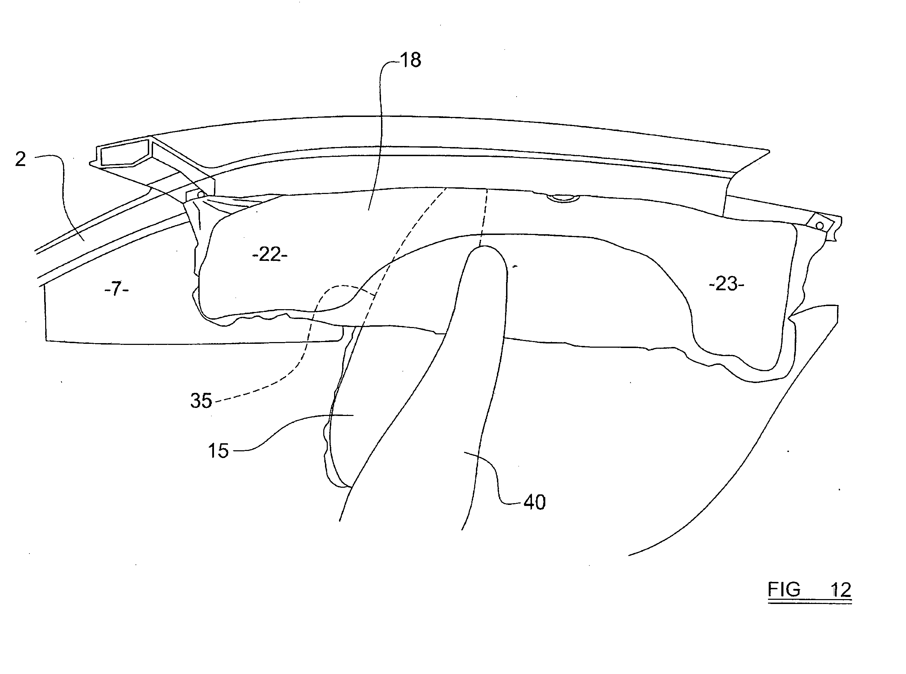

Both cushions then continue to inflate until they reach complete inflation after approximately 25 ms from actuation, this condition being illustrated in figure 11, and also in figure 12 (the occupant 17 being omitted from figure 12 for clarity, and the front seat 40 being shown instead).

It is important to note that the relative positions of the two cushions 15, 18 in their deployed condition is such that the upper region 35 of first cushion 15 (illustrated in phantom in figure 12) is located adjacent the second cushion 18 on the outboard side of the second cushion relative to the vehicle. Furthermore, it should also be noted that the relative arrangement of the two cushions 15, 18 ensures that the inflating gas flowing from the first cushion 15 into the second cushion 18 flows through the internal flow port 38 connecting the two cushions in an inboard direction relative to the vehicle (indicated by arrows F in figure 11), meaning that the gas flows into the upper region of the second cushion generally towards the head region 19 of the adjacent occupant 17. These two inflation characteristics ensure that the first cushion 15, which serves as a torso/pelvis bag, develops relatively quickly to offer early side protection to the occupant's torso/pelvis regions 16, 25, after which the second cushion 18, which serves as an inflatable curtain, will develop towards the occupant's head region 19. Because the upper region 35 of the first cushion 15 inflates before, and outboard of the second cushion 18, the second cushion 18 when it inflates is supported on its outboard side by the upper region 35 of the first cushion. This support, combined with the fact that the inflating gas is directed into the second cushion 19 in an inboard direction, means that as the second cushion inflates it is urged very quickly into contact with occupant's head region 19, thereby minimizing the risk of head and/or neck injury.

As will be appreciated, the combined torso/pelvis airbag and inflatable curtain arrangement of the present invention provides desirable inflation characteristics, whilst also requiring only one inflator 13, shared between the two cushions 15, 18. By eliminating the need for a separate inflator for each cushion, complete side protection can be provided for significantly less weight and cost. Not only can the extra cost and weight of a second inflator be eliminated, but also the extra cost and weight of the associated firing circuitry.

Particularly good inflation characteristics have been found to occur when the total inflatable volumes of the two cushions 15, 18 are approximately equal

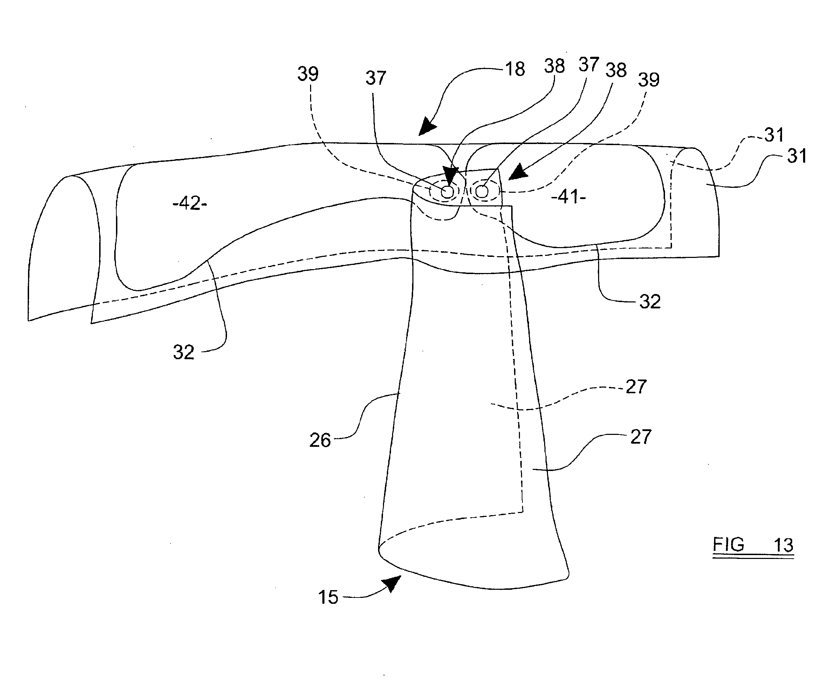

Whilst the present invention has been described above in detail with reference to specific embodiments, it is to be appreciated than various modifications can be made to the arrangement without departing from the scope of the claimed invention. For example, figure 13 illustrates an airbag arrangement in accordance with another embodiment in schematic form. In this arrangement the superimposed fabric layers 31 which form the second cushion 18 are interconnected by seams 32 in a manner effective to define two discrete inflatable chambers 41, 42. The first chamber 41 is located at the front end of the second cushion 18 and is designed to inflate to offer side protection to the head region of the front seat occupant, whilst the second chamber 42 is located at the rear end of the cushion and is designed to inflate to offer side protection to the head region of the rear seat passenger. Because the two chambers 41, 42 are fluidly distinct from one another, they must each be fed with a flow of inflating gas from the first cushion 15. Each chamber 41, 42 is thus provided with a respective aperture 37 formed through the layer of fabric 31 immediately adjacent the superimposed first cushion. The first cushion 15 is provided with two corresponding apertures 37 which are each aligned with a respective aperture 37 in the second cushion to define a pair of flow ports 38 and connected thereto by a peripheral seam 39 generally as described above. In other respects the arrangement of figure 13 is substantially identical to that of figures 5 to 12.

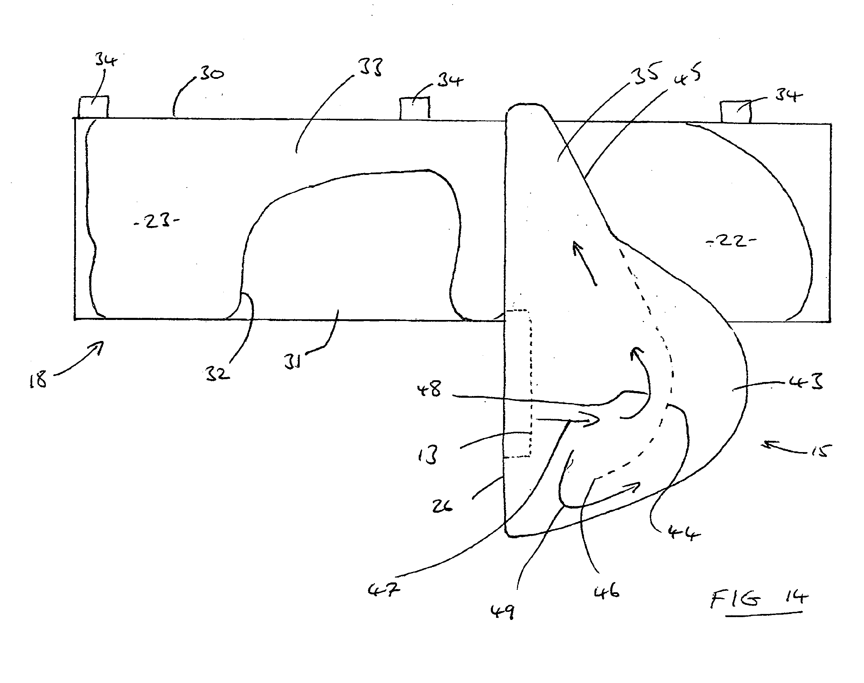

Figure 14 illustrates features of another embodiment of the invention. The particular arrangement illustrated is configured such that the second cushion 18 has a single inflatable chamber 33 defined by the seam 32 rather than two discrete chambers as in the case of the arrangement shown in figure 13. However, it should be noted that the features of the figure 14 arrangement which will be described below can be incorporated into a two-chamber arrangement similar to that of figure 14.

Firstly, it is to be noted that the first cushion 15 of the arrangement shown in figure 14 has a somewhat bulbous profile as compared to that of the embodiments described above which each comprise a first cushion 15 having a generally triangular profile. When comparing the profile of the first cushion shown in figure 14 with that of say figure 5, it will be noted that the front region of the cushion has an enlarged and rounded projection 43. The first cushion may be enlarged in this way so as ensure effective side protection to the front seat occupant whilst permitting a degree of fore-aft adjustment of the position of the seat. As will therefore be noted, the enlarged first cushion 15 provides a larger area of coverage when deployed as compared to that of the smaller, triangular-shaped cushions of the previously described embodiments.

However, if the first cushion 15 is simply increased in size in a fore-aft sense as illustrated in figure 14, then the resulting increase in its inflatable volume will alter its inflation characteristics which, if not carefully managed, may adversely affect the inflation characteristics of the second cushion 18 which of course receives its inflating gas indirectly, via the first cushion 15. More particularly, the resulting increase in volume of the first cushion 15 will increase its inflation time when inflated by any given inflator 13, which will thus mean that the inflating gas may not reach the interconnecting flow port(s) 37 between the two cushions as quickly, thereby delaying deployment of the second cushion 18. The enlarged first cushion is thus preferably provided with an internal gas deflector which is configured to direct at least a significant proportion of the inflating flow of gas from the inflator 13 in a generally upwards direction towards the tapered upper region 35 of the first cushion, and hence towards the flow port(s) 37.

In the arrangement illustrated in figure 14 the gas deflector is defined by a seam 44 which interconnects the two layers of fabric 27 forming the cushion. The seam 44 follows a path which extends downwardly as a substantially linear extension of the front edge 45 of the tapered upper region 35, before curving rearwardly towards the fold 26. The seam 44 terminates at a free end 46 which is spaced forwardly of the inflator 13, slightly below the inflator 13, and above the lower outer edge of the cushion. As will be noted, the internal seam 44 thus follows a path which resembles the triangular profile of the first cushions 15 of the previously described embodiments.

When the inflator 13 is actuated, it produces an inflating flow of gas which has a significant component directed in a generally forwards direction as indicated schematically by arrow 47. This flow causes the first cushion 15 to inflate very rapidly in a generally forwards direction. However, the flow 47 then impinges on the internal seem 44 which acts to deflect the flow in a generally upwards direction towards the flow port(s) 37 as illustrated by arrow 48. This is effective to ensure that despite the increase in internal volume of the first cushion, in a forwardly directed sense, the cushion still deploys upwards with sufficient speed to permit the second cushion 18 to deploy sufficiently quickly to offer effective side protection. The inflating gas inside the first cushion adopts a somewhat swirling flow and will then pass below the free end of the seam 44 (as depicted by arrow 49) so as to inflate the enlarged forward region 43 whilst the cushion continues to develop upwardly.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from scope of the invention.

## Claims

1. A side airbag arrangement (1) in a motor vehicle, the arrangement comprising first and second inflatable cushions (15, 18) and an inflator (13) actuable to inflate both cushions, wherein the first cushion (15) is arranged in fluid communication with the inflator (13) to receive inflating gas directly from the inflator, and the second cushion (18) is arranged in fluid communication with the first cushion (15) to receive inflating gas via the first cushion (15), the first and second cushions being configured for inflation into respective deployed positions in which at least an upper region (35) of the first cushion (15) is located adjacent the second cushion (18) on the outboard side of the second cushion (18) such that said second cushion (18) is supported on its outboard side by said upper region (35) of the first cushion (15), wherein the first and second cushions (15, 18) are fluidly connected to one another in said upper region (35) of the first cushion (15) by at least one flow port (38) arranged to direct said gas from said first cushion (15) into the second cushion (18) in an inboard direction (F); the arrangement being **characterised in that** the or each said flow port (38) is defined by a first flow aperture (37) formed in said upper region (35) of the first cushion (15) and a second flow aperture (37) formed in an upper region of the second cushion (18), the first and second flow apertures (37) being aligned and fixedly connected to one another.

2. A side airbag arrangement according to claim 1, wherein the second cushion (18) comprises at least two discrete inflatable chambers (41, 42), each chamber being fluidly connected to the first cushion (15) by a respective said flow port (38).

3. A side airbag arrangement according to claim 1 or claim 2, wherein the first and second cushions (15, 18) are formed from fabric material, and are interconnected by at least one peripheral seam (39) provided around the aligned first and second apertures (37).

4. A side airbag arrangement according to any preceding claim, configured such that inflation of the second cushion (18) is delayed relative to inflation of the first cushion (15) upon actuation of the inflator (13).

5. A motor vehicle having a side airbag arrangement according to any preceding claim, wherein the motor vehicle has a B-pillar (3), and the inflator (13) is mounted to the B-pillar (3).

6. A motor vehicle according to claim 5, wherein the motor vehicle also has a roof rail (6), and the inflator (13) is mounted to the B-pillar (3) at a position spaced below the roof rail (6).

7. A motor vehicle according to claim 5 or claim 6, wherein the motor vehicle has a seat (39), the first cushion (18) being initially provided in a package (11) mounted to the B-pillar (3) of the motor vehicle and arranged for inflation into a deployed position generally adjacent the seat (39) to provide side protection to the torso (16) and/or pelvis region (25) of an occupant (17) of the seat.

8. A motor vehicle according to claim 7, wherein the first cushion package (11) is mounted to the B-pillar (3) of the motor vehicle at a position spaced below the roof rail (6) of the vehicle, the first cushion (15) being configured to inflate in a substantially upwards direction towards the roof rail (6).

9. A motor vehicle according to any one of claims 5 to 8, wherein the motor vehicle has a side window (7), the second cushion (18) being initially provided in a package (12) mounted to the roof rail (6) of the motor vehicle and arranged for inflation in a substantially downwards direction into a deployed position generally adjacent the side window (7) of the motor vehicle to provide side protection to the head region (19) of an adjacent occupant (17).

10. A motor vehicle according to claim 9 as dependent upon either claim 7 or claim 8, wherein the first cushion (15) is tapered or is otherwise shaped so as to be narrower in its upper region (35) than in its lower region (36), the upper region (35) of the cushion thereby defining a flow duct (14) configured to direct a flow of inflating gas from the lower region (36) of the first cushion to an upper region of the second cushion (18).

11. A motor vehicle according to claim 10 or claim 9 as dependent upon either claim 7 or claim 8, wherein the first cushion package (11) is mounted to the B-pillar (3) at a position below the lowermost edge of the second cushion (18) when the second cushion adopts its deployed position, such that a lower region (36) of the first cushion is positioned below the lowermost edge of the second cushion (18).

12. A motor vehicle according to claim 9, wherein the motor vehicle has a front side window (7) and a rear side window (8), the second cushion (15) having a front end region (22, 41) arranged for deployment generally adjacent the front side window (7), and a rear end region (23, 42) arranged for deployment generally adjacent the rear side window (8), the or each said flow port (38) being located substantially between said front and rear ends in a substantially central region of the second cushion (18).

## Patentansprüche

1. Seitenairbaganordnung (1) in einem Kraftfahrzeug, wobei die Anordnung ein erstes und zweites aufblasbares Kissen (15, 18) und einen Gasgenerator (13) umfasst, der so betätigbar ist, dass er beide Kissen füllt, wobei das erste Kissen (15) mit dem Gasgenerator (13) in Fluidverbindung stehend angeordnet ist, um Füllgas direkt vom Gasgenerator aufzunehmen, und das zweite Kissen (18) mit dem ersten Kissen (15) in Fluidverbindung stehend angeordnet ist, um Füllgas über das erste Kissen (15) aufzunehmen, wobei das erste und zweite Kissen so eingerichtet sind, dass sie sich in jeweilige entfaltete Positionen füllen, in denen zumindest ein oberer Bereich (35) des ersten Kissens (15) angrenzend an das zweite Kissen (18) so auf der Fahrzeugaußenseite des zweiten Kissens (18) liegt, dass das zweite Kissen (18) auf seiner Fahrzeugaußenseite von dem oberen Bereich (35) des ersten Kissens (15) unterstützt wird, wobei das erste und zweite Kissen (15, 18) fluidmäßig miteinander in dem oberen Bereich (35) des ersten Kissens (15) über mindestens eine Strömungsöffnung (38) verbunden sind, die so angeordnet ist, dass sie das Gas aus dem ersten Kissen (15) in das zweite Kissen (18) in einer ins Fahrzeuginnere gerichteten Richtung (F) leitet; wobei die Anordnung **dadurch gekennzeichnet ist, dass** die oder jede Strömungsöffnung (38) durch ein erstes Strömungsloch (37) definiert ist, das in dem oberen Bereich (35) des ersten Kissens (15) ausgebildet ist, und ein zweites Strömungsloch (37), das in einem oberen Bereich des zweiten Kissens (18) ausgebildet ist, wobei das erste und zweite Strömungsloch (37) in einer Linie angeordnet und fest miteinander verbunden sind.

2. Seitenairbaganordnung nach Anspruch 1, wobei das zweite Kissen (18) mindestens zwei getrennte aufblasbare Kammern (41, 42) umfasst, wobei jede Kammer fluidmäßig mit dem ersten Kissen (15) über eine jeweilige solche Strömungsöffnung (38) verbunden ist.

3. Seitenairbaganordnung nach Anspruch 1 oder Anspruch 2, wobei das erste und zweite Kissen (15, 18) aus Stoffmaterial ausgebildet sind und miteinander über mindestens eine Umfangsnaht (39) verbunden sind, die um das in einer Linie angeordnete erste und zweite Loch (37) herum vorgesehen ist.

4. Seitenairbaganordnung nach einem vorhergehenden Anspruch, die so eingerichtet ist, dass die Füllung des zweiten Kissens (18) bezogen auf die Füllung des ersten Kissens (15) beim Betätigen des Gasgenerators (13) verzögert ist.

5. Kraftfahrzeug mit einer Seitenairbaganordnung nach einem vorhergehenden Anspruch, wobei das Kraftfahrzeug eine B-Säule (3) aufweist und der Gasgenerator (13) an der B-Säule (3) montiert ist.

6. Kraftfahrzeug nach Anspruch 5, wobei das Kraftfahrzeug auch einen Dachrahmen (6) aufweist und der Gasgenerator (13) an der B-Säule (3) an einer Stelle montiert ist, die unterhalb des Dachrahmens (6) beabstandet ist.

7. Kraftfahrzeug nach Anspruch 5 oder Anspruch 6, wobei das Kraftfahrzeug einen Sitz (39) aufweist, wobei das erste Kissen (18) anfangs in einer Packung (11) angeordnet ist, die an der B-Säule (3) des Kraftfahrzeugs montiert ist, und so angeordnet ist, dass es sich in eine entfaltete Position ganz allgemein angrenzend an den Sitz (39) füllt, um den Rumpf (16) und/oder Beckenbereich (25) einer Person (17) auf dem Sitz von der Seite zu schützen.

8. Kraftfahrzeug nach Anspruch 7, wobei die erste Kissenpackung (11) an der B-Säule (3) des Kraftfahrzeugs an einer Stelle montiert ist, die unterhalb des Dachrahmens (6) des Fahrzeugs beabstandet ist, wobei das erste Kissen (15) so eingerichtet ist, dass es sich in eine im Wesentlichen nach oben gerichtete Richtung auf den Dachrahmen (6) zu füllt.

9. Kraftfahrzeug nach einem der Ansprüche 5 bis 8, wobei das Kraftfahrzeug ein Seitenfenster (7) aufweist, wobei das zweite Kissen (18) anfangs in einer Packung (12) angeordnet ist, die an dem Dachrahmen (6) des Kraftfahrzeugs montiert ist, und so angeordnet ist, dass es sich in einer im Wesentlichen nach unten gerichteten Richtung in eine entfaltete Position ganz allgemein angrenzend an das Seitenfenster (7) des Kraftfahrzeugs füllt, um den Kopfbereich (19) eines benachbarten Insassen (17) von der Seite zu schützen.

10. Kraftfahrzeug nach Anspruch 9, wenn er entweder von Anspruch 7 oder Anspruch 8 abhängig ist, wobei das erste Kissen (15) spitz zuläuft oder auf andere Weise so geformt ist, dass es in seinem oberen Bereich (35) schmaler als in seinem unteren Bereich (36) ist, wobei der obere Bereich (35) des Kissens dadurch einen Strömungskanal (14) definiert, der so eingerichtet ist, dass er einen Strom Füllgas aus dem unteren Bereich (36) des ersten Kissens zu einem oberen Bereich des zweiten Kissens (18) leitet.

11. Kraftfahrzeug nach Anspruch 10 oder Anspruch 9, wenn er entweder von Anspruch 7 oder Anspruch 8 abhängt, wobei die erste Kissenpackung (11) an der B-Säule (3) an einer Stelle unterhalb der untersten Kante des zweiten Kissens (18), wenn das zweite Kissen seine entfaltete Position annimmt, montiert ist, sodass ein unterer Bereich (36) des ersten Kissens unterhalb der untersten Kante des zweiten Kissens (18) platziert ist.

12. Kraftfahrzeug nach Anspruch 9, wobei das Kraftfahrzeug ein vorderes Seitenfenster (7) und ein hinteres Seitenfenster (8) aufweist, wobei das zweite Kissen (15) einen vorderen Endbereich (22, 41) aufweist, der so angeordnet ist, dass er sich im Allgemeinen angrenzend an das vordere Seitenfenster (7) entfaltet, und einen hinteren Endbereich (23, 42), der so angeordnet ist, dass er sich im Allgemeinen angrenzend an das hintere Seitenfenster (8) entfaltet, wobei die oder jede derartige Strömungsöffnung (38) im Wesentlichen zwischen dem vorderen und hinteren Ende in einem im Wesentlichen mittigen Bereich des zweiten Kissens (18) angeordnet ist.

## Revendications

1. Agencement d'airbag latéral (1) dans un véhicule à moteur, l'agencement comprenant des premier et second coussins gonflables (15, 18) et un gonfleur (13) pouvant être actionné pour gonfler les deux coussins, dans lequel le premier coussin (15) est disposé en liaison fluidique avec le gonfleur (13) pour recevoir du gaz de gonflage venant directement du gonfleur, et le second coussin (18) est disposé en liaison fluidique avec le premier coussin (15) pour recevoir du gaz de gonflage par l'intermédiaire du premier coussin (15), les premier et second coussins étant configurés pour le gonflage dans des positions déployées respectives dans lesquelles au moins une zone supérieure (35) du premier coussin (15) est située adjacente au second coussin (18) sur le côté du second coussin (18) tourné vers l'extérieur du véhicule de sorte que ledit second coussin (18) est supporté sur son côté tourné vers l'extérieur du véhicule par ladite zone supérieure (35) du premier coussin (15), dans lequel les premier et second coussins (15, 18) sont en liaison fluidique l'un avec l'autre dans ladite zone supérieure (35) du premier coussin (15) par au moins un orifice d'écoulement (38) disposé pour diriger ledit gaz dudit premier coussin (15) dans le second coussin (18) dans une direction allant vers l'intérieur du véhicule (F) ; l'agencement étant **caractérisé en ce que** le ou chaque dit orifice d'écoulement (38) est défini par une première ouverture d'écoulement (37) formée dans ladite zone supérieure (35) du premier coussin (15) et une seconde ouverture d'écoulement (37) formée dans une zone supérieure du second coussin (18), les première et seconde ouvertures d'écoulement (37) étant alignées et reliées fixement l'une à l'autre.

2. Agencement d'airbag latéral selon la revendication 1, dans lequel le second coussin (18) comprend au moins deux chambres gonflables (41, 42) distinctes, chaque chambre étant en liaison fluidique avec le premier coussin (15) par un dit orifice d'écoulement (38) respectif.

3. Agencement d'airbag latéral selon la revendication 1 ou la revendication 2, dans lequel les premier et second coussins (15, 18) sont formés en matière textile, et sont interconnectés par au moins une couture périphérique (39) se trouvant autour des première et seconde ouvertures (37) alignées.

4. Agencement d'airbag latéral selon une quelconque revendication précédente, configuré de sorte que le gonflage du second coussin (18) est retardé par rapport au gonflage du premier coussin (15) lors de l'actionnement du gonfleur (13).

5. Véhicule à moteur comportant un agencement d'airbag latéral selon une quelconque revendication précédente, dans lequel le véhicule à moteur comporte un montant B (3), et le gonfleur (13) est monté sur le montant B (3).

6. Véhicule à moteur selon la revendication 5, dans lequel le véhicule à moteur comporte également un longeron de toit (6), et le gonfleur (13) est monté sur le montant B (3) dans une position espacée en dessous du longeron de toit (6).

7. Véhicule à moteur selon la revendication 5 ou la revendication 6, dans lequel le véhicule à moteur comporte un siège (39), le premier coussin (18) se trouvant initialement dans un paquet (11) monté sur le montant B (3) du véhicule à moteur et disposé pour le gonflage dans une position déployée globalement adjacente au siège (39) afin d'assurer une protection latérale du torse (16) et/ou de la région pelvienne (25) d'un occupant (17) du siège.

8. Véhicule à moteur selon la revendication 7, dans lequel le premier paquet de coussin (11) est monté sur le montant B (3) du véhicule à moteur dans une position espacée en dessous du longeron de toit (6) du véhicule, le premier coussin (15) étant configuré pour gonfler dans une direction allant essentiellement vers le haut vers le longeron de toit (6).

9. Véhicule à moteur selon l'une quelconque des revendications 5 à 8, dans lequel le véhicule à moteur comporte une fenêtre latérale (7), le second coussin (18) se trouvant initialement dans un paquet (12) monté sur le longeron de toit (6) du véhicule à moteur et disposé pour le gonflage dans une direction allant essentiellement vers le bas dans une position déployée globalement adjacente à la fenêtre latérale (7) du véhicule à moteur afin d'assurer une protection latérale de la région de la tête (19) d'un occupant adjacent (17).

10. Véhicule à moteur selon la revendication 9, quand elle dépend soit de la revendication 7 soit de la revendication 8, dans lequel le premier coussin (15) s'amincit ou est formé d'autre manière de sorte qu'il est plus étroit dans sa zone supérieure (35) que dans sa zone inférieure (36), la zone supérieure (35) du coussin définissant ainsi un conduit d'écoulement (14) configuré pour diriger un écoulement de gaz de gonflage de la zone inférieure (36) du premier coussin à une zone supérieure du second coussin (18).

11. Véhicule à moteur selon la revendication 10 ou la revendication 9, quand elle dépend soit de la revendication 7 soit de la revendication 8, dans lequel le premier paquet de coussin (11) est monté sur le montant B (3) dans une position en dessous du bord le plus bas du second coussin (18) quand le second coussin adopte sa position déployée, de sorte qu'une zone inférieure (36) du premier coussin est positionnée en dessous du bord le plus bas du second coussin (18).

12. Véhicule à moteur selon la revendication 9, dans lequel le véhicule à moteur comporte une fenêtre latérale avant (7) et une fenêtre latérale arrière (8), le second coussin (15) présentant une zone d'extrémité avant (22, 41) disposée pour le déploiement globalement adjacent à la fenêtre latérale avant (7), et une zone d'extrémité arrière (23, 42) disposée pour le déploiement globalement adjacent à la fenêtre latérale arrière (8), ledit ou chaque dit orifice d'écoulement (38) étant situé essentiellement entre lesdites extrémités avant et arrière dans une zone essentiellement centrale du second coussin (18).
